(19) Europäisches Patentamt
European Patent Office
Office européen des brevets

(11) **EP 2 353 938 B1**

(12) **FASCICULE DE BREVET EUROPEEN**

(45) Date de publication et mention
de la délivrance du brevet:
**13.06.2012 Bulletin 2012/24**

(51) Int Cl.:
***B60Q 11/00*** *(2006.01)*

(21) Numéro de dépôt: **11150425.4**

(22) Date de dépôt: **07.01.2011**

(54) **Détection d'état d'équipements électriques d'un véhicule**

Erfassung des Zustandes eines elektrischen Gerätes von einem Fahrzeug

Detection of the state of an electrical equipment of a vehicle

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **21.01.2010 FR 1050380**

(43) Date de publication de la demande:
**10.08.2011 Bulletin 2011/32**

(73) Titulaire: **COMMISSARIAT A L'ENERGIE
ATOMIQUE ET AUX
ENERGIES ALTERNATIVES
75015 Paris (FR)**

(72) Inventeurs:
• **Le Goff, Alexis**
  **78000, Versailles (FR)**
• **Blanpain, Roland**
  **38380, Entre-Deux-Guiers (FR)**

(74) Mandataire: **de Beaumont, Michel
1bis, rue Champollion
38000 Grenoble (FR)**

(56) Documents cités:
EP-A1- 0 021 916      EP-A2- 1 253 429
DE-A1- 10 326 594     US-A- 5 041 761

EP 2 353 938 B1

# EP 2 353 938 B1

**Description**

<u>Domaine de l'invention</u>

La présente invention concerne de façon générale les véhicules et, plus particulièrement, la détection d'un état allumé ou éteint d'un équipement électrique d'un véhicule. L'invention s'applique plus particulièrement aux véhicules automobiles.

<u>Exposé de l'art antérieur</u>

Dans les véhicules et notamment les véhicules automobiles, il est souhaitable de détecter si une ampoule d'un phare, d'un clignotant ou autre équipement électrique est défectueux. En particulier, si le conducteur peut s'apercevoir aisément de nuit qu'un des feux avant ne fonctionne pas, il ne peut pas s'apercevoir d'un dysfonctionnement des feux arrière ou des feux stop. Cette difficulté se rencontre pour des équipements électriques du véhicule autre que l'éclairage.

On a déjà proposé différents mécanismes pour détecter une déconnexion d'une lampe et identifier la lampe concernée.

Par exemple, le brevet américain N° 5,744,961 décrit un dispositif comportant un noyau magnétique en forme de fer à cheval carré, dans l'entrefer duquel est placé une sonde de Hall. Les conducteurs d'alimentation entre la batterie et chacune des lampes sont enroulés autour du noyau magnétique avec un nombre de tours différents pour chaque lampe. L'exploitation de la mesure du champ magnétique dans l'entrefer permet de déterminer l'état allumé ou éteint des lampes. Une telle solution requiert de dévier les différents conducteurs d'alimentation des équipements électriques pour les enrouler autour d'un noyau magnétique.

Une solution similaire est décrite dans le brevet américain 5 041 761.

Il serait souhaitable de détecter l'état allumé ou éteint de différents équipements électriques d'un véhicule sans qu'il soit nécessaire de ramener les conducteurs vers un noyau magnétique.

<u>Résumé</u>

Un objet d'un mode de réalisation de la présente invention est de pallier tout ou partie des inconvénients des systèmes connus de déconnexion d'un équipement électrique dans un véhicule.

Un objet d'un autre mode de réalisation de la présente invention est de proposer une solution ne requérant aucune modification des connexions électriques.

Un objet d'un autre mode de réalisation de la présente invention est de proposer une solution adaptable aux véhicules déjà en circulation.

Pour atteindre tout ou partie de ces objets ainsi que d'autres, il est prévu un procédé de détection d'un état allumé ou éteint d'équipements électriques d'un véhicule, dans lequel les amplitudes du champ magnétique mesurées dans au moins deux directions sont analysées pour isoler les contributions respectives des différents équipements électriques et en déduire leurs états.

Selon un mode de réalisation de la présente invention, l'analyse prend en compte une phase d'apprentissage dans laquelle les équipements sont successivement allumés et éteints individuellement.

Selon un mode de réalisation de la présente invention, les états respectifs des équipements sont obtenus à partir de valeurs représentatives de l'amplitude du champ magnétique dans lesdites directions et de coefficients obtenus dans la phase d'apprentissage.

Selon un mode de réalisation de la présente invention, les états respectifs des équipements sont obtenus à partir de valeurs représentatives de variations d'amplitude du champ magnétique dans lesdites directions et de coefficients obtenus dans une phase d'apprentissage.

Selon un mode de réalisation de la présente invention, les états respectifs des équipements sont obtenus en calculant des probabilités de combinaisons d'états.

On prévoit également un système de détection d'un état allumé ou éteint d'équipements électriques d'un véhicule, comportant :

au moins deux capteurs magnétiques dans des directions différentes ; et
un circuit d'interprétation des signaux fournis par chaque capteur pour isoler les contributions respectives des différents équipements électriques sur le champ magnétique.

Selon un mode de réalisation de la présente invention, trois capteurs sont intégrés dans un magnétomètre tri-axe.

On prévoit également un véhicule automobile équipé d'un système de détection d'un état allumé ou éteint d'équipements électriques.

Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :

la figure 1 est une représentation schématique d'un exemple de véhicule automobile équipé d'un système selon un mode de réalisation de la présente invention ;
la figure 2 illustre la réponse d'une voie d'un capteur magnétique de la figure 1 ;
la figure 3 représente sous forme de chronogrammes un exemple d'allure de trois voies de capteurs magnétiques ; et
la figure 4 est un schéma électrique simplifié des équipements surveillés dans le véhicule de la figure 1.

Description détaillée

De mêmes éléments ont été désignés par de mêmes références aux différentes figures. Pour des raisons de clarté, seuls les étapes et éléments utiles à la compréhension de l'invention ont été représentés et seront décrits. En particulier, l'exploitation faite des signaux détectant le caractère allumé ou éteint (la déconnexion) d'un équipement électrique n'a pas été détaillée, cette exploitation étant compatible avec les solutions habituelles pour, par exemple, activer des indicateurs alertant le conducteur, mémoriser des incidents de fonctionnement, etc.

L'invention sera décrite par la suite en relation avec un exemple de surveillance de l'allumage ou de l'extinction de lampes pour véhicule automobile. Elle s'applique toutefois plus généralement à la surveillance de tout équipement électrique d'un véhicule.

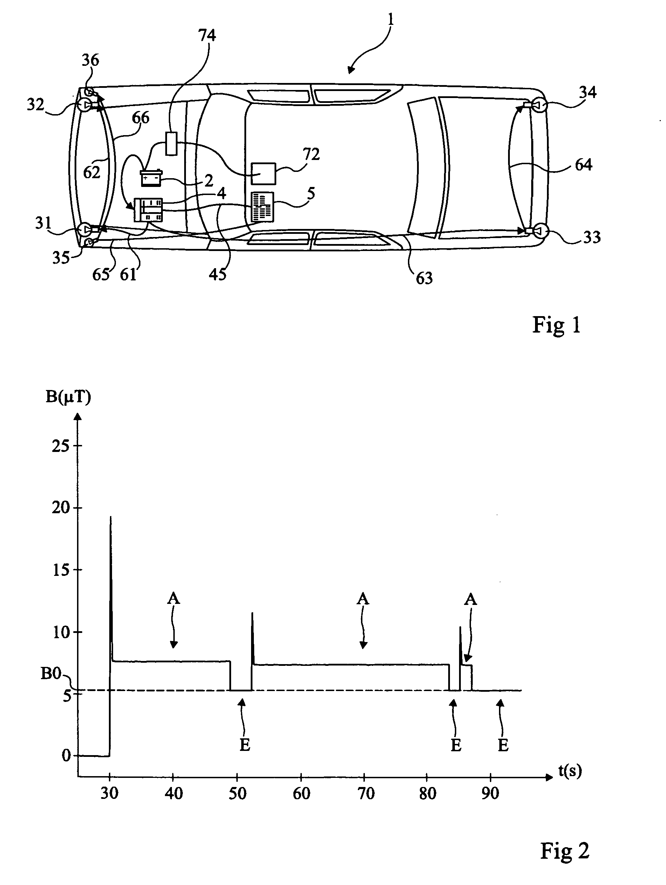

La figure 1 est une vue schématique de dessus d'un véhicule automobile 1 équipé d'un système de détection d'un état allumé ou éteint de lampes selon un mode de réalisation de la présente invention. Les différentes lampes (et autres équipements électriques) du véhicule sont alimentés par une batterie 2. Dans l'exemple de la figure 1, ont été représentés les feux avant 31 et 32, les feux arrière 33 et 34 et les veilleuses avant 35 et 36. En pratique, d'autres lampes et équipements électriques peuvent être surveillés par les modes de réalisation qui vont être décrits.

Les lampes sont alimentées par l'intermédiaire d'un tableau de fusibles 4 sous commande de commutateurs, généralement intégrés dans un pupitre 5 du tableau de bord, et accessibles par des manettes au volant ou par des commandes au tableau de bord. Pour simplifier, les éléments 4 et 5 ont été représentés de façon très schématique en figure 1, reliés par un faisceau de conducteurs 45. Des faisceaux de conducteurs ou liaisons électriques relient le tableau 4 de fusibles et/ou le pupitre de commande 5 aux lampes. Dans la représentation de la figure 1, les liaisons suivantes ont été illustrées :

une liaison 61 du tableau 4 à la lampe 31 et un prolongement 62 de cette liaison jusqu'à la lampe 32 pour une connexion électrique en parallèle des feux avant ;
une liaison 63 du tableau 4 au feu arrière 33 ainsi qu'un prolongement 64 au feu 34 pour une connexion électrique en parallèle des feux arrière ; et
une liaison 65 du pupitre 5 à la veilleuse 35 et un prolongement 66 jusqu'à la veilleuse 36 pour une connexion électrique en parallèle.

La connexion d'un équipement électrique à un commutateur en amont ou en aval du tableau 4 dépend de l'équipement selon que le commutateur est ou non protégé par un fusible. De plus, d'autres équipements sont alimentés sans passer par un commutateur autre qu'un interrupteur général de mise sous tension du véhicule (par exemple, l'ordinateur de bord du véhicule).

Le système de détection de l'état allumé ou éteint (connecté ou déconnecté) des différentes lampes comporte au moins deux capteurs magnétiques (par exemple, un magnétomètre 72 placé à un endroit quelconque du véhicule, par exemple, dans une position approximativement centrale de celui-ci). Les signaux représentatifs du champ magnétique captés par le magnétomètre sont fournis à un circuit 74 d'interprétation et de commande, alimenté par la batterie 2.

Les modes de réalisation décrits proposent d'extraire du champ magnétique mesuré par le magnétomètre 72, les états respectifs des différentes lampes.

En effet, lorsqu'un courant circule dans un conducteur d'alimentation d'un équipement, il induit un champ magnétique qui peut être capté par le magnétomètre 72.

L'invention tire profit du fait que chaque lampe n'est alimentée que par un conducteur (potentiel positif) et que le retour à la masse s'effectue directement par la carcasse du véhicule. En effet, si les conducteurs étaient appariés avec une connexion au potentiel négatif de la batterie 2, les champs magnétiques induits par les courants opposés dans ces conducteurs se compenseraient.

L'invention tire également profit du fait que l'amplitude et l'orientation du champ magnétique (de sa résultante au niveau de chaque capteur) dépend du trajet électrique entre la batterie et l'équipement. Par conséquent, il devient possible d'isoler les contributions respectives des différents équipements sur le champ magnétique mesuré pour détecter et identifier quelle lampe est allumée.

Non seulement les contributions respectives des lampes sur le champ magnétique dépendent des trajets électriques mais également de l'intensité électrique des différentes lampes.

Dans les modes de réalisation décrits, on considère que les contributions des différents éléments électriques sur le champ magnétique se superposent. Le courant électrique qui traverse chaque ampoule n'a que deux valeurs possibles 0 ou le courant nominal de cette ampoule (par exemple, de l'ordre de 1 ampère pour les veilleuses et de l'ordre de 5 ampères pour les feux avant). De plus, la contribution d'une somme d'ampoules est égale à la somme des contributions individuelles de chaque ampoule.

La figure 2 illustre un exemple d'allure de la réponse d'un capteur magnétique lors d'allumages et d'extinctions successifs d'une même lampe. On constate des niveaux A (allumé) et E (éteint) qui sont différents selon l'état de l'ampoule. Dans cet exemple, le champ B est mesuré en micro Tesla. On considère que deux paramètres influencent essentiellement l'amplitude du champ : l'amplitude du courant dans le conducteur, et le trajet électrique (distance et direction) entre la batterie et la lampe, vu du capteur.

On pourrait donc se contenter de mesurer les variations de niveau du champ magnétique mesuré par un capteur. Une telle réalisation simplifiée est déjà un progrès par rapport aux systèmes connus car elle ne requiert aucune modification du câblage du circuit électrique du véhicule. Toutefois, elle souffre d'imprécision. En effet, plusieurs équipements électriques sont susceptibles de générer un champ dont les composantes sur l'axe du capteur sont identiques.

Ainsi, selon un mode de réalisation préféré, on exploite les variations du champ magnétique dans différentes directions au moyen de plusieurs capteurs ou d'un magnétomètre multiaxes définissant plusieurs voies de mesure.

En prenant en compte les réponses sur les différentes voies, on est en mesure d'identifier les équipements électriques concernés.

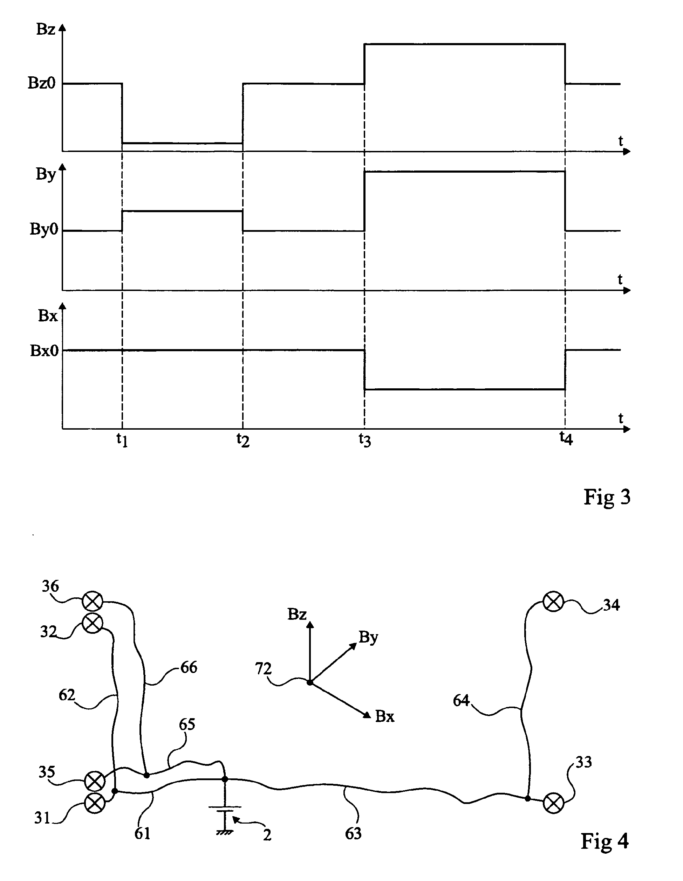

La figure 3 illustre, sous forme de chronogrammes, un exemple de réponse de trois voies Bx, By et Bz d'un magnétomètre tri-axes.

La figure 4 reprend schématiquement depuis la batterie 2 les trajets électriques des six lampes de la figure 1.

Les axes x, y et z sont dans une position arbitraire par rapport au véhicule. Ce qui importe c'est que ces axes ne soient pas parallèles entre eux pour que les contributions respectives du champ magnétique provenant des différents trajets électriques diffèrent d'une voie à l'autre. Prévoir trois axes orthogonaux maximise cependant les différences entre les signaux mesurés.

Par rapport à un niveau de référence Bx0, By0 et Bz0 de chaque voie, correspondant par exemple au niveau où tous les équipements à surveiller sont éteints, on suppose l'allumage (instant t1) puis l'extinction (instant t2) d'un premier équipement électrique (par exemple les lampes 31 et 32) puis l'allumage (instant t3) et l'extinction (instant t4) d'un autre équipement électrique (par exemple les lampes 33 et 34).

Comme il ressort de la figure 3, la contribution d'un même équipement diffère selon la voie. Cela est dû à l'orientation du champ magnétique résultant du chemin électrique de cet équipement par rapport à l'orientation du capteur. De plus, chaque lampe est alimentée par un trajet différent (par exemple 61 pour le feu 31 et 61+62 pour le feu 32) même si elle est commandée en même temps qu'une autre. Par conséquent, un défaut d'une lampe peut être identifié même si l'autre fonctionne.

On peut ainsi identifier les différents équipements électriques en analysant les différentes réponses, par exemple de la façon suivante.

On désigne par i (i étant compris entre 1 et m) la voie du capteur (m valant 3 dans l'exemple des figures 3 et 4), par k un chemin électrique (une ampoule) surveillée (k est compris entre 1 et n, n valant 6 dans l'exemple des figures 1 et 4), par $I_k$ le courant dans ce chemin quand l'ampoule est allumée, par $\alpha_{k,i}$ un facteur géométrique du chemin électrique pour chaque voie, par $\varepsilon_k$ une variable d'état qui prend la valeur 0 ou 1 selon l'état allumé ou éteint de l'ampoule k concernée (ou le caractère défectueux du circuit qui l'alimente). L'objectif est de déterminer la variable d'état $\varepsilon_k$ de chaque lampe.

Le champ magnétique d'une voie i, noté Bi, correspond à la somme des produits $\alpha_{k,i}{}^*I_k{}^*\varepsilon_k$, majorée d'une valeur $B_i0$ représentant la contribution du champ extérieur à cette voie. Cela se traduit par la formule suivante :

$$B_i = \sum_{k=1}^{n} \left( \alpha_{k,i} \times I_k \times \varepsilon_k \right) + B_i0. \qquad \text{(formule 1)}$$

En première approximation, on peut considérer que les produits $\alpha_{k,i}{}^*I_k$ sont constants pour un équipement k donné. Par ailleurs, on peut considérer que les contributions respectives des équipements ferromagnétiques non électriques ne modifient que la valeur $B_i0$.

L'équation précédente peut donc s'écrire sous une forme matricielle :

$$B = M.\varepsilon + B0, \qquad \text{(formule 2)}$$

où B représente le vecteur de mesure des champs magnétiques $B_i$, M représente une matrice, dite de mélange, de n colonnes et m lignes comportant les coefficients $\alpha_{k,i}.l_k$, $\varepsilon$ représente un vecteur d'état composé de 0 et de 1 selon les états respectifs des différentes lampes surveillées, et B0 représente un vecteur des niveaux de repos des différentes voies.

La matrice de mélange M est déterminée, dans une phase d'apprentissage. Par exemple, en sortie de fabrication du véhicule, en faisant fonctionner les différents équipements électriques séparément, il est possible d'enregistrer la contribution de chaque ampoule sur les différents capteurs (ou axes) et obtenir et mémoriser les coefficients de la matrice M.

En fonctionnement, la mesure des coefficients du vecteur B et la connaissance de la matrice M et du vecteur B0 permet de déterminer le vecteur $\varepsilon$, donc les états respectifs des différents équipements électriques.

La détection peut être améliorée en tenant compte d'une variation des valeurs de repos B0. En effet, l'inventeur a constaté que, comme il ressort de la figure 2, des pics de champ magnétique apparaissent lors des commutations d'établissement du courant dans une lampe et que le pic lors d'un allumage à froid était particulièrement important. Ces pics proviennent de pics de courant qui sont dus au fait que la résistance des ampoules est plus faible à froid. L'inventeur considère que ces pics sont suffisamment puissants pour aimanter la matière ferromagnétique se trouvant à proximité du conducteur alimenté et que cette aimantation est conservée par cet environnement jusqu'à l'application d'un courant plus important dans le conducteur (donc, le pic suivant). On assiste alors à une variation des valeurs de repos B0.

Pour tenir compte de ce phénomène, on détecte de préférence les sauts de valeur du champ magnétique qui indiquent l'allumage ou l'extinction d'une ou plusieurs lampes. Un autre avantage d'un tel mode de réalisation est que l'on s'affranchit également des autres variations de champ magnétique telles que les variations du champ magnétique terrestre ou les autres perturbations magnétiques environnantes.

En reprenant les notations précédentes, une variation ΔB sur le vecteur de mesure B correspond à la somme algébrique de la contribution de chaque équipement nouvellement allumé ou nouvellement éteint. La formule 2 ci-dessus devient :

$$\Delta B = M.\Delta\varepsilon + B0, \qquad \text{(formule 3)}$$

où Δε représente un vecteur de changements d'états composé de 0 et de -1. L'élément $\Delta\varepsilon_k$ de rang k du vecteur Δε vaut 0 si l'état de la lampe k n'a pas changé lors de la variation de champ magnétique et -1 si c'est l'une des lampes dont l'extinction a contribué à cette variation.

Le traitement du signal opéré par le circuit 74 revient alors à détecter et évaluer l'amplitude des sauts ΔB sur le vecteur B, puis à estimer le vecteur de changements d'états Δε à partir de cette évaluation.

Pour détecter les sauts sur le vecteur B et évaluer l'amplitude de ces sauts, on utilise préférentiellement un algorithme dit de Deriche qui permet de détecter la rupture dans des signaux bruités. On s'affranchit ainsi du bruit magnétique polluant les signaux fournis par le ou les magnétomètres. L'algorithme de Deriche est généralement utilisé dans le traitement d'images pour détecter les contours qui correspondent à des ruptures dans des signaux bruités. Par exemple, on pourra s'inspirer de l'article "A new operator for the détection of transitions in noisy signals" de WY. Liu, IE Mangnin, et G. Gimenez paru dans traitement du signal volume 12 N° 3, pages 225 à 236 en 1995.

L'application d'un opérateur de Deriche aux différents signaux des capteurs fournit des signaux impulsionnels dont les impulsions correspondent à des sauts du signal mesuré. La largeur des impulsions dépend d'un paramètre, noté $\alpha$, de l'opérateur qui résulte d'un compromis entre la précision de la détection qui réclame des impulsions larges et la résolution (capacité à détecter des sauts rapprochés) qui réclame des impulsions courtes.

A titre d'exemple, la réponse $\theta_i(t_0)$ à un instant $t_0$ de l'opérateur de Deriche appliqué à un signal $B_i(t)$, peut s'exprimer par la formule 4 suivante :

$$\theta_i(t_0) = \int_{-\infty}^{+\infty} \left( - B_i(t) \times \frac{\left(1 - e^{-\alpha}\right)^2}{e^{-\alpha}} \times (t - t_0) \times e^{-\alpha|t - t_0|} \right) dt \,.$$

On enregistre, comme niveau mesuré, les amplitudes des différentes impulsions qui sont proportionnelles aux amplitudes des sauts dans le signal $B_i$. Par la suite, on notera $\Delta B_i$ l'amplitude de l'impulsion $\theta_i$.

Selon un mode de réalisation préféré, pour obtenir le vecteur de changements d'états, on associe à chaque valeur possible $\Delta\varepsilon_k$ du vecteur $\Delta\varepsilon$ une probabilité que cette valeur corresponde à la réalité. En pratique, on interprète les résultats d'un balayage de l'ensemble des valeurs possibles du vecteur $\Delta\varepsilon$. On pourra par exemple s'inspirer de la méthode décrite dans l'article "Inverse Problem Theory - Method for Data Fitting and Model Parameter Estimation", de A. Tarantola, paru aux éditions Elsevier en 1987 (pages 1 à 161).

En désignant par z chacune des possibilités que peut prendre le vecteur $\Delta\varepsilon$ (z étant compris entre 1 et $2^n$) et $\sigma_i$ l'écart-type d'un saut sur la voie i, la probabilité Pz que la possibilité z soit la combinaison d'états qui correspond à la réalité peut s'exprimer :

$$P_z = \exp\left( - \frac{1}{2} \times \sqrt{\sum_i \frac{\Delta B_i - (M \times \Delta\varepsilon_z)_i}{\sigma_i}} \right). \qquad \text{(formule 5)}$$

En divisant, pour chaque voie i, le vecteur de mesure $\Delta B_i$ par l'écart-type $\sigma_i$ de la voie concernée (noté $\Delta B'_i$), et en calculant, pour chaque voie, une matrice de mélange M'i obtenue en divisant les coefficients de la matrice M par l'écart-type $\sigma_i$ de la voie concernée, la formule 5 ci-dessus peut se simplifier pour donneur :

$$P_z = \exp\left( - \frac{1}{2} \times \left\| \Delta B'_i - \left( M'_i \times \Delta\varepsilon_z \right) \right\| \right). \qquad \text{(formule 6)}$$

En calculant cette probabilité pour tous les vecteurs $\Delta\varepsilon_z$, la combinaison qui fournit la probabilité la plus élevée donne le vecteur de changements d'états.

On peut encore améliorer la fiabilité de la détection en tenant compte de la tension U de la batterie. Par exemple, lorsque le moteur du véhicule tourne, la tension de la batterie est plus élevée que lorsque le moteur est arrêté. De plus, à l'arrêt, la tension peut chuter en fonction du courant que la batterie débite. Dans ce cas, l'intensité $I_k$ qui traverse chaque élément électrique n'est pas constante mais dépend de la tension U. Selon un mode de réalisation encore préféré, on tient compte de cette variation.

On s'intéresse alors à la grandeur Bi/U au lieu de Bi. Par exemple, lors de la phase d'apprentissage, les différents coefficients de la matrice de mélange M sont obtenus en faisant varier la tension de la batterie de façon à tenir compte de la résistance des équipements électriques. Puis, les valeurs mesurées du champ magnétique (vecteur de mesure B) sont divisées par la tension courante aux bornes de la batterie. La détermination s'effectue alors selon l'un des modes de réalisation exposés précédemment d'après les niveaux (application de la formule 2) ou d'après les sauts (application de la formule 3).

Un avantage des modes de réalisation décrits est qu'ils permettent de détecter un allumage et une extinction, volontaire ou accidentelle, dans un équipement électrique d'un véhicule de façon particulièrement simple. En particulier, il n'est pas nécessaire d'enrouler chaque conducteur autour d'un noyau ferromagnétique, ni de modifier les trajets électriques.

Un autre avantage est que l'invention est compatible avec les véhicules déjà fabriqués et peut donc s'installer en accessoire. Il suffit de prévoir une phase d'apprentissage dans laquelle les différents équipements électriques sont allumés et éteints les uns après les autres pour paramétrer le système.

On notera qu'il n'est pas obligatoire de surveiller tous les équipements électriques. En effet, les commutations d'un équipement électrique pour lequel le système n'est pas paramétré ne seront pas reconnues (leurs contributions sur le champ magnétique étant différente de celles contenues dans la matrice de mélange).

Des modes de réalisation particuliers de la présente invention ont été décrits. Diverses variantes et modifications apparaîtront à l'homme de l'art. En particulier, le choix des équipements électriques à surveiller conditionne la phase d'apprentissage opérée pour repérer leur contribution respective.

De plus, la mise en oeuvre pratique de l'invention à partir des indications fonctionnelles données ci-dessus est à la portée de l'homme du métier. En particulier, bien que l'invention ait été décrite en se référant à des signaux continus (analogiques), les calculs seront en pratique effectués par des circuits numériques requérant un échantillonnage des signaux mesurés, le choix de la fréquence d'échantillonnage conditionnant la résolution du système.

En outre, bien que l'invention ait été décrite en relation avec un exemple de lampes commutées en tout ou rien, les équipements électriques surveillés pourront également être des équipements à gradateur de puissance pourvu que le courant lors de l'extinction soit toujours le même.

**Revendications**

1. Procédé de détection d'un état allumé ou éteint d'équipements électriques (31, 32, 33, 34, 35, 36) d'un véhicule, dans lequel les amplitudes (Bi) du champ magnétique mesurées dans au moins deux directions (x, y, z) sont analysées pour isoler les contributions respectives des différents équipements électriques et en déduire leurs états ($\varepsilon_k$).

2. Procédé selon la revendication 1, dans lequel l'analyse prend en compte une phase d'apprentissage dans laquelle les équipements sont successivement allumés et éteints individuellement.

3. Procédé selon la revendication 2, dans lequel les états respectifs ($\varepsilon_k$) des équipements sont obtenus à partir de valeurs (Bi) représentatives de l'amplitude du champ magnétique dans lesdites directions et de coefficients (M) obtenus dans la phase d'apprentissage.

4. Procédé selon la revendication 2, dans lequel les états respectifs ($\varepsilon_k$) des équipements sont obtenus à partir de valeurs représentatives de variations d'amplitude ($\Delta B_i$) du champ magnétique dans lesdites directions et de coefficients (M) obtenus dans une phase d'apprentissage.

5. Procédé selon la revendication 4, dans lequel les états respectifs ($\varepsilon_k$) des équipements sont obtenus en calculant des probabilités ($P_z$) de combinaisons (z) d'états.

6. Système de détection d'un état ($\varepsilon_k$) allumé ou éteint d'équipements électriques (31, 32, 33, 34, 35, 36) d'un véhicule (1), comportant :

   au moins deux capteurs magnétiques (72) dans des directions différentes (x, y, z) ; et
   un circuit (74) d'interprétation des signaux (Bi) fournis par chaque capteur pour isoler les contributions respectives des différents équipements électriques sur le champ magnétique.

7. Système selon la revendication 6, comportant trois capteurs intégrés dans un magnétomètre tri-axe (72).

8. Système selon la revendication 6 ou 7, dans lequel le circuit d'interprétation (74) met en oeuvre le procédé selon l'une quelconque des revendications 1 à 5.

9. Véhicule automobile (1) équipé d'un système (72, 74) conforme à l'une quelconque des revendications 6 à 8.

**Claims**

1. A method for detecting an on or off state of electrical equipment (31, 32, 33, 34, 35, 36) of a vehicle, wherein the amplitudes (Bi) of the magnetic field measured in at least two directions (x, y, z) are analyzed to isolate the respective contributions of the different pieces of electrical equipment and deduce their state ($\varepsilon_k$) therefrom.

2. The method of claim 1, wherein the analysis takes into account a training phase in which the pieces of equipment are successively and individually turned on and off.

3. The method of claim 2, wherein the respective states ($\varepsilon_k$) of the pieces of equipment are obtained from values (Bi) representative of the amplitude of the magnetic field in said directions and from coefficients (M) obtained in the training phase.

**4.** The method of claim 2, wherein the respective states ($\varepsilon_k$) of the pieces of equipment are obtained from values representative of amplitude variations ($\Delta B_i$) of the magnetic field in said directions and from coefficients (M) obtained in a training phase.

**5.** The method of claim 4, wherein the respective states ($\varepsilon_k$) of the pieces of equipment are obtained by calculating probabilities ($P_z$) of state combinations (z).

**6.** A system for detecting an on or off state ($\varepsilon_k$) of electrical equipment (31, 32, 33, 34, 35, 36) of a vehicle (1), comprising:

at least two magnetic sensors (72) in different directions (x, y, z); and
a circuit (74) for interpreting the signals ($B_i$) provided by each sensor to isolate the respective contributions of the different pieces of electrical equipment to the magnetic field.

**7.** The system of claim 6, comprising three sensors integrated in a three-axis magnetometer (72).

**8.** The system of claim 6 or 7, wherein the interpretation circuit (74) implements the method of any of claims 1 to 5.

**9.** A motor vehicle (1) equipped with the system (72, 74) of any of claims 6 to 8.

**Patentansprüche**

**1.** Ein Verfahren zum Detektieren eines Ein- oder Auszustandes eines elektrischen Gerätes (31, 32, 33, 34, 35, 36) eines Fahrzeugs, wobei die Amplituden ($B_i$) des Magnetfeldes gemessen in mindestens zwei Richtungen (x, y, z) analysiert werden, um die entsprechenden Beiträge der unterschiedlichen Teile des elektrischen Gerätes zu isolieren und ihren Zustand ($\varepsilon_k$) daraus abzuleiten.

**2.** Das Verfahren nach Anspruch 1, wobei die Analyse eine Trainingsphase in Betracht zieht, in der die Teile des Geräts aufeinander folgend und individuell ein- und ausgeschaltet werden.

**3.** Das Verfahren nach Anspruch 2, wobei die entsprechenden Zustände ($\varepsilon_k$) der Teile des Geräts in der Trainingsphase erhalten werden und zwar aus Werten ($B_i$), die repräsentativ sind für die Amplitude des Magnetfeldes in den erwähnten Richtungen und aus Koeffizienten (M).

**4.** Das Verfahren nach Anspruch 2, wobei die entsprechenden Zustände ($\varepsilon_k$) der Teile des Geräts in einer Trainingsphase erhalten werden und zwar aus Werten, die repräsentativ sind für Amplitudenveränderungen ($\Delta B_i$) des Magnetfeldes in den erwähnten Richtungen und aus Koeffizienten (M).

**5.** Das Verfahren nach Anspruch 4, wobei die entsprechenden Zustände ($\varepsilon_k$) der Teile des Geräts aus Werten erhalten werden durch Berechnung von Wahrscheinlichkeiten ($P_z$) von Zustandskombinationen (z).

**6.** Ein System zum Detektieren des Ein- oder Auszustandes ($\varepsilon_k$) des elektrischen Geräts (31, 32, 33, 34, 35, 36) eines Fahrzeugs (1), wobei Folgendes vorgesehen ist:

mindestens zwei Magnetsensoren (72) in unterschiedlichen Richtungen (x, y, z); und
eine Schaltung (74) zum Interpretieren der Signale ($B_i$), geliefert durch jeden Sensor zur Isolierung der entsprechenden Beiträge der unterschiedlichen Teile des elektrischen Geräts für das Magnetfeld.

**7.** Das System nach Anspruch 6, wobei drei Sensoren vorgesehen sind, die in ein Dreiachsen-Magnetometer (72) integriert sind.

**8.** Das System nach Anspruch 6 oder 7, wobei die Interpretationsschaltung (74) das Verfahren irgendeines der Ansprüche 1 bis 5 implementiert.

**9.** Ein Motorfahrzeug (1), ausgerüstet mit dem System (72, 74) irgendeines der Ansprüche 6 bis 8.

Fig 1

Fig 2

Fig 3

Fig 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **WY. Liu ; IE Mangnin ; G. Gimenez.** A new operator for the détection of transitions in noisy signals. *traitement du signal,* 1995, vol. 12 (3), 225-236

- **A. Tarantola.** Inverse Problem Theory - Method for Data Fitting and Model Parameter Estimation. Elsevier, 1987, 1-161